(19) Europäisches Patentamt
European Patent Office
Office européen des brevets

(11) EP 2 841 883 B1

(12) **EUROPÄISCHE PATENTSCHRIFT**

(45) Veröffentlichungstag und Bekanntmachung des Hinweises auf die Patenterteilung:
**03.11.2021 Patentblatt 2021/44**

(21) Anmeldenummer: **13713381.5**

(22) Anmeldetag: **19.03.2013**

(51) Int Cl.:
***G01F 1/696*** *(2006.01)*

(86) Internationale Anmeldenummer:
**PCT/EP2013/055627**

(87) Internationale Veröffentlichungsnummer:
**WO 2013/160018 (31.10.2013 Gazette 2013/44)**

(54) **VERFAHREN ZUM THERMISCHEN BESTIMMEN EINES MASSEDURCHFLUSSES EINES GASFÖRMIGEN MEDIUMS UND THERMISCHER MASSEDURCHFLUSSMESSER**

METHOD FOR THERMAL DETERMINATION OF A MASS FLOW OF A GASEOUS MEDIUM AND THERMAL MASS FLOW METER

PROCÉDÉ POUR DÉTERMINER THERMIQUEMENT UN DÉBIT MASSIQUE D'UN FLUIDE GAZEUX ET DÉBITMÈTRE MASSIQUE THERMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.04.2012 DE 102012007880**
**23.07.2012 DE 102012106657**

(43) Veröffentlichungstag der Anmeldung:
**04.03.2015 Patentblatt 2015/10**

(73) Patentinhaber: **Endress+Hauser Flowtec AG**
**4153 Reinach (BL) (CH)**

(72) Erfinder:
• **BADARLIS, Anastasios**
**CH-4127 Birsfelden (CH)**
• **BAUR, Tobias**
**CH-4145 Reinach (CH)**
• **PFAU, Axel**
**CH-4147 Aesch (CH)**
• **SCHULTHEIS, Hanno**
**79539 Lörrach (DE)**

(74) Vertreter: **Andres, Angelika Maria**
**Endress+Hauser Group Services (Deutschland) AG+Co. KG**
**Colmarer Straße 6**
**79576 Weil am Rhein (DE)**

(56) Entgegenhaltungen:
**EP-B1- 0 624 242    US-A- 3 085 431**

• **Stephan Ihle: "Experimentelle Bestimmung des Recoveryfaktors einer Temperatursonde", , Mai 2009 (2009-05), XP055074766, Gefunden im Internet: URL:http://publik.tuwien.ac.at/files/PubDat_175750.pdf [gefunden am 2013-08-09]**
• **None**

**Beschreibung**

Die vorliegende Erfindung betrifft ein Verfahren zum thermischen Bestimmen eines Massedurchflusses eines gasförmigen Mediums und einen thermischen Massedurchflussmesser.

Verfahren zum thermischen Bestimmen eines Massedurchflusses eines Gases und entsprechende thermische Massedurchflussmesser sind an sich bekannt. Sie beruhen darauf, einen ersten von dem Medium umströmten Temperaturfühler zu heizen um eine Temperaturdifferenz zu einem zweiten von dem Medium umströmten Temperaturfühler zu erzeugen, bzw. aufrecht zu erhalten.

Je stärker der Massenstrom, desto mehr Wärme wird von dem Medium abtransportiert, und desto mehr Heizleistung ist erforderlich um beispielsweise eine vorgegebene Temperaturdifferenz aufrecht zu erhalten. Insofern ist der so genannte Leistungskoeffizient, also das Verhältnis zwischen der Heizleistung Q und der erzielten Temperaturdifferenz ein Maß für den Massedurchfluss.

Zur genauen Bestimmung des Massedurchflusses wird anhand des Leistungskoeffizienten ein Wärmeübergangskoeffizient (htc) nach dem Englischen Heat Transfer Coefficient ermittelt, anhand dessen dann über Nusselt-, Prandtl- und Reynolds-Zahl der Massedurchfluss zu bestimmen ist. Einzelheiten dazu sind insbesondere in dem Europäischen Patentschrift EP 0 624 242 B1 offenbart. Die Offenlegungsschrift DE 10 2005 057 688 A1 offenbart ein Verfahren zum Bestimmen des Massedurchflusses mit einer Machzahlkorrektur.

Beide vorgenannten Dokumente zum Stand der Technik beschreiben gute Verfahren für hinreichend niedrige Strömungsgeschwindigkeiten bzw. für symmetrische Anordnungen von Temperaturfühlern.

Insbesondere dann, wenn Asymmetrien zwischen den Temperaturfühlern auftreten, kommt bei höheren Strömungsgeschwindigkeiten der so genannte Recovery-Effekt zum Tragen, welcher eine Erwärmung der Temperaturfühler aufgrund des Stoppens des Gasstroms an der Fühleroberfläche bewirkt.

US Patent No. 3,085,431 beschreibt einen Durchflussmesser bei dem geringfügige Abweichungen in der räumlichen Anordnung der Temperaturfühlerelemente bezüglich eines Fluidstroms Abweichungen zwischen den Recovery-Faktoren auftreten können.

Stephan Ihle hat 2009 mit seiner Bachelorarbeit an der TU Wien die experimentelle Bestimmung des Recoveryfaktors einer Temperatursonde veröffentlicht.

Insbesondere bei asymmetrischen Durchflussmessern der Recovery-Effekt die Messgenauigkeit beachtlich negativ beeinflussen. Es ist daher die Aufgabe der vorliegenden Erfindung ein Verfahren zum thermischen Bestimmen des Massedurchflusses eines Gases und einen thermischen Massedurchflussmesser bereitzustellen, wodurch der Recovery-Effekt korrigiert wird.

Die Aufgabe wird erfindungsgemäß gelöst durch das Verfahren gemäß Anspruch 1 und den thermischen Durchflussmesser gemäß Anspruch 10.

Das erfindungsgemäße Verfahren zum Bestimmen eines Massedurchflusses eines gasförmigen Mediums mittels eines thermischen Massedurchflussmessers, welcher mindestens einen ersten von dem Medium umströmbaren Temperaturfühler aufweist, welcher mindestens einen zweiten von dem Medium umströmbaren Temperaturfühler aufweist, wobei der erste Temperaturfühler von dem zweiten Temperaturfühler beabstandet ist, wobei der erste Temperaturfühler mit einer Heizleistung Q beheizt wird, wobei der Wärmeübertrag von dem ersten Temperaturfühler in das Medium von dem Massedurchfluss des Mediums abhängt, wobei der Massedurchfluss des Mediums in Abhängigkeit von einer Heizleistung Q und einer Temperaturdifferenz $\Delta T_m = T_1 - T_2$ zwischen den Messwerten des ersten Temperaturfühlers und des zweiten Temperaturfühlers mittels eines Leistungskoeffizienten $PC = Q/\Delta T$ bestimmt wird,

wobei ein korrigierter Leistungskoeffizient $PC_{corr}$ aus korrigierten Werten der Temperaturdifferenz $\Delta T$ bestimmt wird, indem mindestens eine Korrektur mittels mindestens eines Recovery-Korrekturterms $K_i$ erfolgt,

wobei der Recovery-Korrekturterm $K_i$ die Form $K_i = \Delta_x \cdot u^2 / (2 \cdot c_p)$ auf weist, wobei u ein Wert für die Strömungsgeschwindigkeit des Mediums ist, wobei $c_p$ ein Wert für die Wärmekapazität des Mediums ist, wobei $\Delta_x$ ein Element der Menge $\{\Delta_1; \Delta_2; \Delta_{12}\}$ ist, wobei $\Delta_1 := e_1-c_r$, $\Delta_2 := e_2- c_r$ und $\Delta_{12} := e_1- e_2 = \Delta_1 - \Delta_2$, wobei $e_1$ und $e_2$ die Recovery-Faktoren des ersten bzw. zweiten Temperaturfühlers sind, und wobei $c_r$ ein konstanter Referenzwert ist, für den gilt $c_r \leq 1$, insbesondere $c_r = 1$,

wobei der erste und der zweite Temperaturfühler unterschiedliche Recovery-Faktoren $e_1$, $e_2$ aufweisen, wobei der erste und der zweite Temperaturfühler unterschiedliche strömungswirksame Formen aufweisen.

wobei der Recovery-Korrekturterm $K_i$ von einer Temperaturdifferenz $\Delta T$ zu subtrahieren oder zu der Temperaturdifferenz $\Delta T$ zu addieren ist, um eine korrigierte Temperaturdifferenz $\Delta T_{corr}$ zu erhalten, die als Divisor bzw. Faktor in die Bestimmung eines korrigierten Leistungskoeffizienten $PC_{corr}$ eingeht.

In einer Weiterbildung der Erfindung ist der Divisor $D_i$ bzw. der Faktor $F_i$ mit der Temperaturdifferenz $\Delta T$ normiert, so dass der Divisor $D_i$ bzw. Faktor $F_i$ die Form $[1 \pm (K_i/\Delta T)]$ aufweist.

In einer Weiterbildung der Erfindung wird mindestens eine erste korrigierte Temperaturdifferenz $\Delta T_{corr\_1}$ ermittelt, indem von der gemessenen Temperaturdifferenz $\Delta T_m$ ein Korrekturterm $K_1 = \Delta_{12} \cdot u^2 / (2 \cdot c_p)$

subtrahiert wird, also $\Delta T_{corr\_1} := AT_m - K_1 = \Delta T_m - \Delta_{12} \cdot u^2 / (2 \cdot c_p)$.

In einer Weiterbildung der Erfindung wird mittels der ersten korrigierten Temperaturdifferenz ein erster korrigierter Leistungskoeffizient ermittelt, wobei insbesondere gilt: $PC_{corr\_1} = Q / \Delta T_{corr\_1}$.

In einer Weiterbildung der Erfindung wird mindestens eine zweite korrigierte Temperaturdifferenz $\Delta T_{corr\_2}$ ermittelt, indem von einer Temperaturdifferenz $\Delta T$ ein Korrekturterm K2 abgezogen wird, bzw. zu einer Temperaturdifferenz $\Delta T$ ein Korrekturterm K2 addiert wird, in den nur einer der Recovery-Factoren eingeht, wobei $K_2 = \Delta_1 \cdot u^2 / (2 \cdot c_p)$ und $\Delta T_{corr\_2} = \Delta T + K_2$.

In einer Weiterbildung der Erfindung wird anhand des von nur einem Recovery-Faktor abhängigen Korrekurterm K2 der zur ersten korrigierten Temperaturdifferenz $\Delta T_{corr\_1}$ addiert wird, eine zweite korrigierte Temperaturdifferenz $\Delta T_{corr\_2}$ ermittelt, mit welcher anhand des ersten korrigierten Leistungskoeffizienten ein zweiter korrigierter Leistungskoeffizient bestimmt wird: $PC_{corr\_2} = PC_{corr\_1} / (1 + K_2/\Delta T_{corr\_1})$.

In einer Weiterbildung der Erfindung wird der Wert für die Strömungsgeschwindigkeit aus einem Wert für den Massedurchfluss sowie aus Werten für den Druck und die Temperatur des Mediums abgeleitet, wobei der Druckwert als Messwert bereitgestellt wird oder vorgegeben ist.

In einer Weiterbildung der Erfindung wird anhand des korrigierten Leistungskoeffizienten ein Wärmeübergangskoeffizient (htc) ermittelt, wobei anhand des korrigierten ermittelten Wärmeübergangskoeffizienten (htc) aktuelle Werte für die Nusselt-Zahl (Nu), und die Prandtl-Zahl (Pr) bestimmt werden, mit deren Hilfe ein aktueller Wert für die Reynolds-Zahl (Re) ermittelt wird, wobei anhand der Reynolds-Zahl ein Wert für den Massedurchfluss und die Strömungsgeschwindigkeit ermittelt werden.

In einer Weiterbildung der Erfindung erfolgt mit dem ermittelten Wert für die Strömungsgeschwindigkeit eine erneute Korrektur für den Recovery-Effekt, wobei mit dem resultierenden Leistungskoeffizienten eine erneute Ermittlung von Massedurchfluss und Strömungsgeschwindigkeit durchgeführt wird, und wobei das Verfahren iterativ wiederholt wird, bis die Werte für Massedurchfluss und Strömungsgeschwindigkeit hinreichend konvergiert sind um einer gegebenen Anforderung und die Messgenauigkeit zu genügen.

Der erfindungsgemäße Durchflussmesser zum thermischen Bestimmen des Massedurchflusses eines Gases in einer Leitung, nach einem Verfahren nach einem der vorhergehenden Ansprüche, umfasst mindestens einen ersten von dem Medium umströmbaren Temperaturfühler; mindestens einen zweiten von dem Medium umströmbaren Temperaturfühler; wobei der erste Temperaturfühler von dem zweiten Temperaturfühler beabstandet ist, wobei der erste Temperaturfühler ein Heizelement aufweist; wobei der Durchflussmesser weiterhin eine Betriebs- und Auswerteschaltung aufweist, um

das Heizelement mit einer Leistung Q zu speisen, die Temperaturen des ersten Temperaturfühlers und des zweiten Temperaturfühlers $T_1$, $T_2$ zu erfassen, anhand der Leistung und einer Differenz $\Delta T$ zwischen den gemessenen Temperaturen $T_1$, $T_2$ einen Leistungskoeffizienten zu ermitteln, aus dem Leistungskoeffizienten einen Wärmeübergangskoeffizienten (htc) zu ermitteln, wobei anhand des ermittelten Wärmeübergangskoeffizienten (htc) aktuelle Werte für die Nusselt-Zahl (Nu), und die Prandtl-Zahl (Pr) bestimmt werden, mit deren Hilfe ein aktueller Wert für die Reynolds-Zahl (Re) ermittelt wird, wobei anhand der Reynolds-Zahl ein Wert für den Massedurchfluss und die Strömungsgeschwindigkeit ermittelt werden, dadurch gekennzeichnet, dass der erste und der zweite Temperaturfühler unterschiedliche strömungswirksame Formen aufweisen, und die Betriebs- und Auswerteschaltung dazu eingerichtet ist, einen Leistungskoeffizienten $PC_{korr}$ zu ermitteln, der hinsichtlich des Recovery-Effekts korrigiert ist.

In einer Weiterbildung der Erfindung weist die Betriebs- und Auswerteschaltung einen Mikroprozessor und mindestens einen Datenspeicher auf, in dem die mindestens ein Recovery-Faktor oder eine Differenz zwischen zwei Recovery-Faktoren gespeichert ist.

In einer Weiterbildung der Erfindung weist die Betriebs und Auswerteschaltung mindestens einen Datenspeicher aufweist, in dem die Zusammenhänge zwischen dem Wärmeübergangskoeffizienten (htc) und der Nusselt-Zahl (Nu), bzw. zwischen der Nusselt-Zahl (Nu), der Prandtl-Zahl (Pr) und der Reynolds-Zahl (Re) tabellarisch und/oder als Funktionen gespeichert sind.

Die Erfindung wird nun anhand des in den Zeichnungen dargestellten Ausführungsbeispiels offenbart.

Es zeigt:

Fig. 1: eine schematische Darstellung eines Ausführungsbeispiels eines erfindungsgemäßen Durchflussmessers; und

Fig. 2: ein Flussdiagramm zur Korrektur von Fehlern aufgrund des Recovery-Effekts.

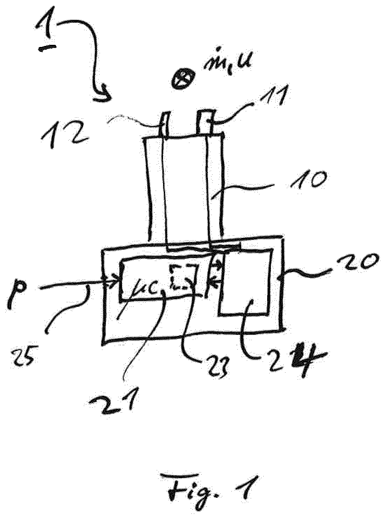

Der in Fig. 1 dargestellte thermische Durchflussmesser 1 umfasst ein zylindrisches Trägerrohr 10 sowie einen erster Temperaturfühler 11 und einen zweiten Temperaturfühler 12, die jeweils von einer Stirnfläche des Trägerrohrs 10 hervorstehen. Die Temperaturfühler umfassen jeweils eine metallische Hülse mit einer Länge von etwa 1 cm in welcher jeweils ein Widerstandsthermometer angeordnet ist. Der erste Temperaturfühler 11 kann zudem über einen elektrischen Widerstand in der Hülse beheizt werden. Die Hülse des ersten Temperaturfühlers 11 weist einen Außendurchmesser von etwa 6 mm auf, während der Außendurchmesser des zweiten Temperaturfühlers etwa 3 mm beträgt.

Der Durchflussmesser umfasst weiterhin ein Elektronikmodul 20 mit einem Mikrokontroller 21, der einen Datenspeicher 23 enthält, sowie eine Betriebs und Messschaltung 24 zum Beheizen des ersten Temperaturfühlers 11 und zum Messen der Temperaturen $T_1$ und $T_2$ des ersten und zweiten Temperaturfühler 11, 12, wobei die Betriebs und Messschaltung 24 von dem Mikrokontroller gesteuert wird.

Grundsätzlich erfolgt die thermische Ermittlung eines Massedurchflusses, indem der erste Temperaturfühler mit einer Heizleistung Q versorgt wird, die so geregelt wird, das die Differenz der Temperaturen $T_1$ und $T_2$ der beiden Temperaturfühler einem Sollwert entspricht. Aus dem daraus resultierenden Leitungskoeffizienten wird dann ein Wärmeübergangskoeffizient htc, ermittelt, auf dieser Basis wird dann über die Ermittlung der Nusselt-Zahl (Nu), und dem Zusammenhang zwischen der Nusselt-Zahl (Nu), der Prandtl-Zahl (Pr) und der Reynolds-Zahl (Re) der Massedurchfluss und die Geschwindigkeit ermittelt. Dieses Verfahren ist in dem europäischen Patent EP 0 624 242 B1 beschrieben und kommt zur Umsetzung der vorliegenden Erfindung zur Anwendung. Die erforderlichen Zusammenhänge zwischen PC, htc, Nu, Pr und Re sind tabellarisch und/oder funktional im Datenspeicher 23 bzw. einem zusätzlichen Datenspeicher hinterlegt.

Erfindungsgemäß erfolgt zusätzlich mindestens eine Korrektur für den Recovery-Effekt. Grundlage hierfür ist die Kenntnis der Recovery-Faktoren $e_1$, $e_2$ und der Differenz der Recovery-Faktoren $\Delta_{12} = e_1 - e_2$.

Die Differenz der Recovery-Faktoren $\Delta_{12} = e_1 - e_2$ kann beispielsweise bestimmt werden, indem ein unbeheizter thermischer Durchflussmesser mit einer Heizleistung von Q=0 einem definierten Massestrom eines Gases unter verschiedenen Geschwindigkeiten u ausgesetzt wird, aus den resultierenden Temperaturdifferenzen $\Delta T = T_1 - T_2 = \Delta_{12} \cdot u^2 / (2 \cdot c_p)$ lässt sich $\Delta_{12}$ bestimmen, ohne die Einzelwerte der Recovery-Faktoren $e_1$, $e_2$ zu kennen.

Die Bestimmung eines Recovery-Faktors eines Temperaturfühlers kann grundsätzlich durch Umströmen des mit einem definierten Massestrom eines Gases mit bekannter Temperatur bei verschiedenen Strömungsgeschwindigkeiten oder durch Differenzmessung gegen einen anderen Temperaturfühler mit bekanntem Recovery-Faktor erfolgen. Ein Verfahren zum Bestimmen eines Recovery Faktors einer Temperaturssonde ist von Stephan Ihle in seiner Bachelorarbeit an der TU Wien mit dem Titel "Experimentelle Bestimmung des Recoveryfaktors einer Temperatursonde" offenbart.

Die ermittelte Werte von $\Delta_{12}$ $\Delta_1$ werden in dem Datenspeicher 23 hinterlegt und stehen damit für die Auswertung zur Verfügung.

Bei den genannten Geometrien liegen die Recovery-Faktoren beider Temperaturfühler zwischen 0,9 und 1 wobei der Recovery-Faktor des ersten Temperaturfühlers regelmäßig der kleinere von beiden ist.

Weiterhin enthält der Datenspeicher mindestens einen Wert für die Wärmekapazität $c_p$ eines Gases dessen Massedurchfluss zu messen ist.

Ein weiterer wesentlicher Parameter ist der Druck, mit dem das Gas an den Temperaturfühlern vorbeiströmt, denn davon hängt bei gegebenem Massedurchfluss die Strömungsgeschwindigkeit ab.

In Anordnungen mit konstantem Druck kann der Druck als fester Parameter vorgegeben und abgespeichert sein. Bei Anordnungen mit schwankendem Gasdruck ist dagegen ein Druckmesswert von einem externen Drucksensor über einen Signaleingang 25 zuzuführen, sofern der Durchflussmesser keinen integrierten Druckmesser aufweist.

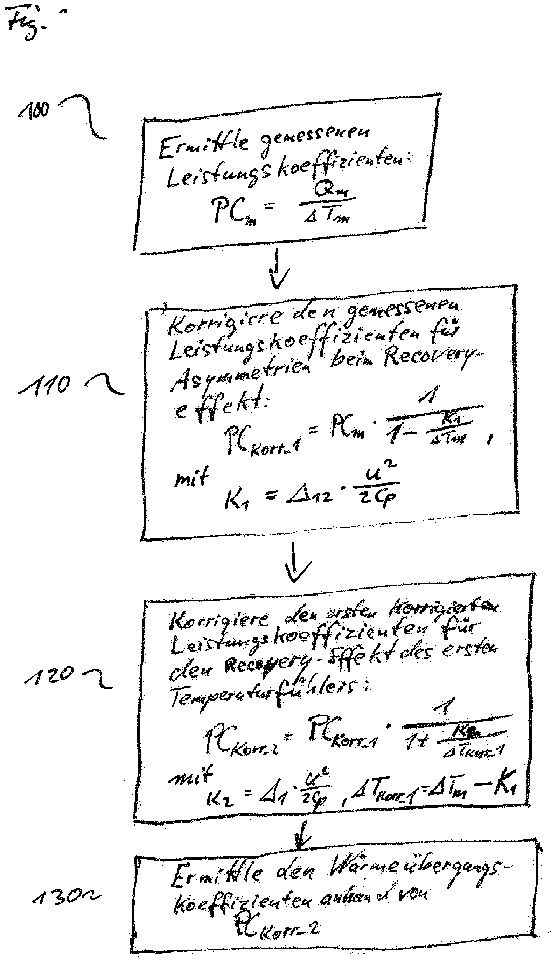

Fig. 2 gibt einen Überblick über ein Ausführungsbeispiel zur Korrektur für den Recovery-Effekt.

In Schritt 100 wird zunächst konventionell ein Leistungskoeffizient $PC_m$ anhand der Messwerte für die Leistung Q und die Temperaturdifferenz $\Delta T$ bestimmt.

Anschließend folgt in Schritt 110 eine Korrektur für die Asymmetrie in den Recovery-Faktoren.

In Schritt 120 wird dann eine zweite Korrektur durchgeführt, um den Recovery-Effekt des ersten Temperaturfühlers an sich auszugleichen.

In Schritt 130 erfolgt schließlich die Ermittlung des Wärmeübergangskoeffizienten htc aus dem um den Recovery-Effekt korrigierten Leistungskoeffizienten. Dieser Schritt und die folgenden Schritte zum Ermitteln des Massedurchflusses und der Strömungsgeschwindigkeit erfolgt wieder gemäß dem Stand der Technik.

In den Schritt 110 ist die Strömungsgeschwindigkeit als Parameter eingegangen. Herbei wird gewöhnlich ein vergleichsweise aktueller Wert, beispielsweise der letzte verfügbare Messwert als Startwert für die Korrektur in einem iterativen Verfahren angesetzt, bei dem mit der Ende eines Durchlaufs ermittelten Strömungsgeschwindigkeit die Korrektur für den Recovery-Effekt erneut durchgeführt wird, bis die resultierenden Werte für Massedurchfluss und Strömungsgeschwindigkeit hinreichend Stabil sind, um einem vorgegebenen Kriterium für die Messgenauigkeit zu genügen, beispielsweise $(u_n - u_{n-1})/u_n < 3\%$, insbesondere $< 1\%$, und bevorzugt $< 0,5\%$.

**Patentansprüche**

1. Verfahren zum Bestimmen eines Massedurchflusses eines gasförmigen Mediums mittels eines thermischen Massedurchflussmessers,

   welcher mindestens einen ersten von dem Medium umströmbaren Temperaturfühler aufweist,
   welcher mindestens einen zweiten von dem Medium umströmbaren Temperaturfühler aufweist,
   wobei der erste Temperaturfühler von dem zweiten Temperaturfühler beabstandet ist,
   wobei der erste Temperaturfühler mit einer Heizleistung Q beheizt wird,
   wobei der Wärmeübertrag von dem ersten Temperaturfühler in das Medium von dem Massedurchfluss des Mediums abhängt,

wobei der Massedurchfluss des Mediums in Abhängigkeit von einer Heizleistung Q und einer Temperaturdifferenz $\Delta T_m = T_1 - T_2$ zwischen den Messwerten des ersten Temperaturfühlers und des zweiten Temperaturfühlers mittels eines Leistungskoeffizienten $PC = Q/\Delta T$ bestimmt wird,

ein korrigierter Leistungskoeffizient $PC_{corr}$ aus korrigierten Werten der Temperaturdifferenz $\Delta T$ bestimmt wird, indem mindestens eine Korrektur mittels mindestens eines Recovery-Korrekturterms $K_i$ erfolgt,

wobei

der Recovery-Korrekturterm $K_i$ die Form

$$K_i = \Delta_x \cdot u^2 / (2 \cdot c_p)$$

aufweist,

wobei u ein Wert für die Strömungsgeschwindigkeit des Mediums ist,

wobei $c_p$ ein Wert für die Wärmekapazität des Mediums ist,

wobei $\Delta_x$ ein Element der Menge $\{\Delta_1; \Delta_2; \Delta_{12}\}$ ist, wobei $\Delta_1 := e_1-c_r$, $\Delta_2 := e_2- c_r$ und $\Delta_{12} := e_1- e_2 = \Delta_1 - \Delta_2$,

wobei $e_1$ und $e_2$ die Recovery-Faktoren des ersten bzw. zweiten Temperaturfühlers sind, und wobei $c_r$ ein konstanter Referenzwert ist, für den gilt $c_r \leq 1$,

**dadurch gekennzeichnet, dass**

der erste und der zweite Temperaturfühler unterschiedliche strömungswirksame Formen aufweisen, und

der erste und der zweite Temperaturfühler unterschiedliche Recovery-Faktoren $e_1$, $e_2$ aufweisen,

wobei der Recovery-Korrekturterm $K_i$ von einer Temperaturdifferenz $\Delta T$ zu subtrahieren oder zu der Temperaturdifferenz $\Delta T$ zu addieren ist, um eine korrigierte Temperaturdifferenz $\Delta T_{corr}$ zu erhalten, die als Divisor bzw. Faktor in die Bestimmung eines korrigierten Leitungskoeffizienten $PC_{corr}$ eingeht.

2. Verfahren nach Anspruch 1, wobei der Divisor $D_i$ bzw. Faktor $F_i$ mit der Temperaturdifferenz $\Delta T$ normiert ist, so dass der Divisor $D_i$ bzw. Faktor $F_i$ die Form $[1 \pm (K_i/\Delta T)]$ aufweist.

3. Verfahren nach einem der vorhergehenden Ansprüche,

wobei mindestens eine erste korrigierte Temperaturdifferenz $\Delta T_{corr\_1}$ ermittelt wird, indem von der gemessenen Temperaturdifferenz $\Delta T_m$ ein Korrekturterm $K_1 = \Delta_{12} \cdot u^2 / (2 \cdot c_p)$ subtrahiert wird, also

$$\Delta T_{corr\_1} := \Delta T_m - K_1 =$$

$$\Delta T_m - \Delta_{12} \cdot u^2 / (2 \cdot c_p).$$

4. Verfahren nach Anspruch 3, wobei mittels der ersten korrigierten Temperaturdifferenz ein erster korrigierter Leistungskoeffizient ermittelt wird:

$$PC_{corr\_1} = Q / \Delta T_{corr\_1}$$

5. Verfahren nach einem der vorhergehenden Ansprüche,

wobei mindestens eine zweite korrigierte Temperaturdifferenz $\Delta T_{corr\_2}$ ermittelt wird, indem von einer Temperaturdifferenz $\Delta T$ ein Korrekturterm $K_2$ abgezogen wird, bzw. zu einer Temperaturdifferenz $\Delta T$ ein Korrekturterm $K_2$ addiert wird, in den nur einer der Recovery-Factoren eingeht, wobei

$$K_2 = \Delta_1 \cdot u^2 / (2 \cdot c_p)$$

und

$$\Delta T_{corr\_2} = \Delta T + K_2$$

6. Verfahren nach Ansprüchen 4 und 5, wobei anhand des von nur einem Recovery-Faktor abhängigen Korrekurterm $K_2$ der zur ersten korrigierten Temperaturdifferenz $\Delta T_{corr\_1}$ addiert wird, eine zweite korrigierte Temperaturdifferenz $\Delta T_{corr\_2}$ ermittelt wird, mit welcher anhand des ersten korrigierten Leistungskoeffizienten ein zweiter korrigierter Leistungskoeffizient bestimmt wird:

$$PC_{corr\_2} = PC_{corr\_1} / (1 + K_2/\Delta T_{corr\_1}).$$

7. Verfahren nach einem der vorhergehenden Ansprüche, wobei der Wert für die Strömungsgeschwindigkeit, aus einem Wert für den Massedurchfluss sowie aus Werten für den Druck und die Temperatur des Mediums abgeleitet wird, wobei der Druckwert als Messwert bereitgestellt wird oder vorgegeben ist.

8. Verfahren nach einem der vorhergehenden Ansprüche, wobei anhand des korrigierten Leistungskoeffizienten ein Wärmeübergangskoeffizient (htc) ermittelt wird, wobei anhand des korrigierten ermittelten Wärmeübergangskoeffizienten (htc) aktuelle Werte für die Nusselt-Zahl (Nu), und die Prandtl-Zahl (Pr) bestimmt werden, mit deren Hilfe ein aktueller Wert für die Reynolds-Zahl (Re) ermittelt wird, wobei anhand der Reynolds-Zahl ein Wert für den Massedurchfluss und die Strömungsgeschwindigkeit ermittelt werden.

9. Verfahren nach Anspruch 8, wobei mit dem ermittelten Wert für die Strömungsgeschwindigkeit eine erneute Korrektur für den Recovery-Effekt erfolgt, mit dem resultierenden Leistungskoeffizienten eine erneute Ermittlung von Massedurchfluss und Strömungsgeschwindigkeit durchgeführt wird, und wobei das Verfahren iterativ wiederholt wird, bis die Werte für Massedurchfluss und Strömungsgeschwindigkeit hinreichend konvergiert sind um einer gegebenen Anforderung und die Messgenauigkeit zu genügen.

10. Durchflussmesser zum thermischen Bestimmen des Massedurchflusses eines Gases in einer Leitung nach einem Verfahren nach einem der vorhergehenden Ansprüche, umfassend:

mindestens einen ersten von dem Medium umströmbaren Temperaturfühler;
mindestens einen zweiten von dem Medium umströmbaren Temperaturfühler;
wobei der erste Temperaturfühler von dem zweiten Temperaturfühler beabstandet ist,
wobei der erste Temperaturfühler ein Heizelement aufweist;
wobei der Durchflussmesser weiterhin eine Betriebs- und Auswerteschaltung aufweist, um das Heizelement mit einer Leistung Q zu speisen,
die Temperaturen des ersten Temperaturfühlers und des zweiten Temperaturfühlers $T_1$, $T_2$ zu erfassen,
anhand der Leistung und einer Differenz $\Delta T$ zwischen den gemessenen Temperaturen $T_1$, $T_2$ einen Leistungskoeffizienten zu ermitteln,
aus dem Leistungskoeffizienten einen Wärmeübergangskoeffizienten (htc) zu ermitteln, wobei anhand des ermittelten Wärmeübergangskoeffizienten (htc) aktuelle Werte für die Nusselt-Zahl (Nu), und die Prandtl-Zahl (Pr) bestimmt werden, mit deren Hilfe ein aktueller Wert für die Reynolds-Zahl (Re) ermittelt wird, wobei anhand der Reynolds-Zahl ein Wert für den Massedurchfluss und die Strömungsgeschwindigkeit ermittelt werden,
**dadurch gekennzeichnet, dass**
der erste und der zweite Temperaturfühler unterschiedliche strömungswirksame Formen aufweisen, und
die Betriebs- und Auswerteschaltung dazu eingerichtet ist, einen Leistungskoeffizienten $PC_{korr}$ zu ermitteln, der hinsichtlich des Recovery Effekts korrigiert ist.

11. Durchflussmesser nach Anspruch 10, wobei die Betriebs und Auswerteschaltung einen Mikroprozessor und mindestens einen Datenspeicher aufweist, in dem die mindestens ein Recovery-Faktor oder eine Differenz zwischen zwei Recovery-Faktoren gespeichert ist, und/oder in dem die Zusammenhänge zwischen dem Wärmeübergangskoeffizienten (htc) und der Nusselt-Zahl (Nu), bzw. zwischen der Nusselt-Zahl (Nu), der Prandtl-Zahl (Pr) und der Reynolds-Zahl (Re) tabellarisch und/oder als Funktionen gespeichert sind.

## Claims

1. Procedure designed to determine a mass flow of a gaseous medium using a thermal mass flowmeter,

wherein said flowmeter has at least a first temperature sensor around which the medium can flow,
wherein said flowmeter has at least a second temperature sensor around which the medium can flow,
wherein the first temperature sensor is spaced at a distance from the second temperature sensor,
wherein the first temperature sensor is heated with a heating power Q,
wherein the transfer of heat from the first temperature sensor to the medium depends on the mass flow of the medium,
wherein the mass flow of the medium is determined depending on a heating power Q and a temperature difference $\Delta T_m = T_1 - T_2$ between the measured values of the first temperature sensor and of the second temperature sensor by means of a power coefficient $PC = Q/\Delta T$,
wherein a corrected power coefficient $PC_{corr}$ is determined from corrected values of the temperature difference $\Delta T$ in that at least a correction is made using at least a recovery correction term $K_i$,
wherein
the recovery correction term $K_i$ has the form

$$K_i = \Delta_x \cdot u^2 / (2 \cdot c_p)$$

where u is a value for the flow velocity of the medium,
where $c_p$ is a value for the thermal capacity of the medium,
where $\Delta_x$ is an element of the group $\{\Delta_1; \Delta_2; \Delta_{12}\}$,
where $\Delta_1 := e_1 - c_r$, $\Delta_2 := e_2 - c_r$ et $\Delta_{12} := e_1 - c_2 = \Delta_1 - \Delta_2$,
where $e_1$ and $e_2$ are the recovery factors of the first and second temperature sensor, and
where $c_r$ is a constant reference value for which

the following applies $c_r \leq 1$,
**characterized in that**
the first and the second temperature sensor have different forms in terms of flow efficiency, and
the first and the second temperature sensor have different recovery factors $e_1$, $e_2$, wherein the recovery correction term $K_i$ should be subtracted from a temperature difference $\Delta T$ or added to the temperature difference $\Delta T$ to get a corrected temperature difference $\Delta T_{corr}$ which is used as a divisor or a factor in determining a corrected power coefficient $PC_{corr}$.

2. Procedure as claimed in Claim 1, wherein the divisor $D_i$ or the factor $F_i$ is normalized with the temperature difference $\Delta T$, in such a way that the divisor $D_i$ or the factor $F_i$ has the form $[1 \pm (K_i/\Delta T)]$.

3. Procedure as claimed in one of the previous claims, wherein at least a first corrected temperature difference $\Delta T_{corr\_1}$ is determined by subtracting a correction term $K_1 = \Delta_{12} \cdot u^2 / (2 \cdot c_p)$ from the measured temperature difference $\Delta T_m$, specifically

$$\Delta T_{corr\_1} := \Delta T_m - K_1 =$$

$$\Delta T_m - \Delta_{12} \cdot u^2 / (2 \cdot c_p).$$

4. Procedure as claimed in Claim 3, wherein a first corrected power coefficient is determined using the first corrected temperature difference:

$$PC_{corr\_1} = Q / \Delta T_{corr\_1}$$

5. Procedure as claimed in one of the previous claims, wherein at least a second corrected temperature difference $\Delta T_{corr\_2}$ is determined by subtracting a correction term $K_2$ from a temperature difference $\Delta T$ or by adding a correction term $K_2$ to a temperature difference $\Delta T$ wherein in said term only one of the recovery factors is included, where

$$K_2 = \Delta_1 \cdot u^2 / (2 \cdot c_p)$$

and

$$\Delta T_{corr\_2} = \Delta T + K_2$$

6. Procedure as claimed in Claims 4 and 5, wherein on the basis of the correction term $K_2$, which is only dependent on one recovery factor and which is added to the first corrected temperature difference $\Delta T_{corr\_1}$, a second corrected temperature difference $\Delta T_{corr\_2}$ is determined with which a second corrected power coefficient is determined on the basis of the first corrected power coefficient:

$$PC_{corr\_2} = PC_{corr\_1} / (1 + K_2/\Delta T_{corr\_1}).$$

7. Procedure as claimed in one of the previous claims, wherein the value for the flow velocity is derived from a value for the mass flow and from values for the pressure and the temperature of the medium, wherein the pressure value is provided as a measured value or is predefined.

8. Procedure as claimed in one of the previous claims, wherein a heat transfer coefficient (htc) is determined on the basis of the corrected power coefficient, wherein current values for the Nusselt number (Nu) and the Prandtl number (Pr) are determined on the basis of the corrected determined heat transfer coefficient (htc), wherein with the aid of said value a current value is determined for the Reynolds number (Re), wherein a value for the mass flow and the flow velocity is determined on the basis of the Reynolds number.

9. Procedure as claimed in Claim 8, wherein a new correction is performed for the recovery effect with the value determined for the flow velocity, wherein the mass flow and the flow velocity are redetermined using the resulting power coefficient, and wherein the procedure is repeated in an iterative manner until the values for mass flow and flow velocity have sufficiently converged to satisfy a set requirement regarding measuring accuracy.

10. Flowmeter for the thermal determination of the mass flow of a gas in a pipe according to a procedure as claimed in one of the previous claims, said flowmeter comprising:

at least a first temperature sensor around which the medium can flow;
at least a second temperature sensor around which the medium can flow;
wherein the first temperature sensor is spaced at a distance from the second temperature sensor,
wherein the first temperature sensor has a heating element;
wherein the flowmeter further comprises an operation and evaluation circuit to supply the heating element with a power Q,
measure the temperatures of the first temperature sensor and the second temperature sensor $T_1$, $T_2$,
determine a power coefficient using the power Q and a difference $\Delta T$ between the measured temperatures $T_1$, $T_2$, determine a heat transfer coefficient (htc) from the power coefficient, wherein the heat transfer coefficient (htc) determined is used to determine current values for the Nusselt number (Nu) and the Prandtl number (Pr) with the aid of which a current value for the Reynolds number (Re) is determined, wherein a value for the mass flow and the flow velocity is determined on the basis of the Reynolds number,

**characterized in that**

the first and the second temperature sensor have different forms in terms of flow efficiency, and

the operating and evaluation circuit is designed to determine a power coefficient $PC_{korr}$ which is corrected with regard to the recovery effect.

11. Flowmeter as claimed in Claim 10, wherein the operation and evaluation circuit comprises a microprocessor and at least a data memory in which the at least one recovery factor or a difference between two recovery factors is stored, and/or in which the relations between the heat transfer coefficient (htc) and the Nusselt number (Nu), or between the Nusselt number (Nu), the Prandtl number (Pr) and the Reynolds number (Re) are saved in table form and/or as functions.

**Revendications**

1.  Procédé destiné à la détermination du débit massique d'un produit gazeux au moyen d'un débitmètre massique thermique,

    lequel débitmètre comporte au moins un premier capteur de température autour duquel le produit peut circuler,
    lequel débitmètre comporte au moins un deuxième capteur de température autour duquel le produit peut circuler,
    le premier capteur de température étant espacé du deuxième capteur de température,
    le premier capteur de température étant chauffé avec une puissance de chauffage Q,
    le transfert de chaleur du premier capteur de température vers le produit étant dépendant du débit massique du produit,
    le débit massique du produit étant déterminé en fonction d'une puissance de chauffage Q et d'une différence de température $\Delta T_m = T_1 - T_2$ entre les valeurs mesurées du premier capteur de température et du deuxième capteur de température au moyen d'un coefficient de puissance $PC = Q/\Delta T$,
    un coefficient de puissance corrigé $PC_{corr}$ étant déterminé à partir de valeurs corrigées de la différence de température $\Delta T$ en effectuant au moins une correction au moyen d'au moins un terme de correction de récupération $K_i$,
où
le terme de correction de récupération $K_i$ a la forme

$$K_i = \Delta_x \cdot u^2 / (2 \cdot c_p)$$

u étant une valeur pour la vitesse d'écoulement du produit,
$c_p$ étant une valeur pour la capacité thermique du produit,
$\Delta_x$ étant un élément de l'ensemble $\{\Delta_1 ; \Delta_2 ; \Delta_{12}\}$, avec $\Delta_1 := e_1\text{-}c_r$, $\Delta_2 := e_2\text{-}c_r$ et $\Delta_{12} := e_1\text{-}c_2 = \Delta_1 - \Delta_2$,
$e_1$ et $e_2$ étant les facteurs de récupération du premier et du deuxième capteur de température, et
$c_r$ étant une valeur de référence constante pour laquelle s'applique $c_r \leq 1$,

**caractérisé en ce que**

le premier et le deuxième capteur de température présentent des formes différentes en terme d'efficacité d'écoulement, et
le premier et le deuxième capteur de température présentent des facteurs de récupération différents $e_1$, $e_2$,
le terme de correction de récupération $K_i$ devant être soustrait d'une différence de température $\Delta T$ ou ajouté à la différence de température $\Delta T$ pour obtenir une différence de température corrigée $\Delta T_{corr}$ qui est utilisée comme diviseur ou facteur dans la détermination d'un coefficient de puissance corrigé $PC_{corr}$.

2.  Procédé selon la revendication 1, pour lequel le diviseur $D_i$ ou le facteur $F_i$ est normalisé avec la différence de température $\Delta T$, de sorte que le diviseur $D_i$ ou le facteur $F_i$ a la forme $[1 \pm (K_i/\Delta T)]$.

3.  Procédé selon l'une des revendications précédentes,
    pour lequel au moins une première différence de température corrigée $\Delta T_{corr\_1}$ est déterminée en soustrayant un terme de correction $K_1 = \Delta_{12} \cdot u^2 / (2 \cdot c_p)$ de la différence de température mesurée $\Delta T_m$, à savoir

$$\Delta T_{corr\_1} := \Delta T_m - K_1 =$$

$$\Delta T_m - \Delta_{12} \cdot u^2 / (2 \cdot c_p).$$

4.  Procédé selon la revendication 3, pour lequel un premier coefficient de puissance corrigé est déterminé au moyen de la première différence de température corrigée :

$$PC_{corr\_1} = Q / \Delta T_{corr\_1}$$

**5.** Procédé selon l'une des revendications précédentes,
pour lequel au moins une deuxième différence de température corrigée $\Delta T_{corr\_2}$ est déterminée en soustrayant un terme de correction $K_2$ d'une différence de température $\Delta T$ ou en ajoutant à une différence de température $\Delta T$ un terme de correction $K_2$ dans lequel un seul des facteurs de récupération est inclus, avec

$$K_2 = \Delta_1 \cdot u^2 / (2 \cdot c_p)$$

et

$$\Delta T_{corr\_2} = \Delta T + K_2$$

**6.** Procédé selon les revendications 4 et 5, pour lequel une deuxième différence de température corrigée $\Delta T_{corr\_2}$ est déterminée sur la base du terme de correction $K_2$ qui ne dépend que d'un seul facteur de récupération et qui est ajouté à la première différence de température corrigée $\Delta T_{corr\_1}$, deuxième différence de température avec laquelle un deuxième coefficient de puissance corrigé est déterminé sur la base du premier coefficient de puissance corrigé :

$$PC_{corr\_2} = PC_{corr\_1} / (1 + K_2/\Delta T_{corr\_1}).$$

**7.** Procédé selon l'une des revendications précédentes, pour lequel la valeur de la vitesse d'écoulement est dérivée d'une valeur du débit massique et de valeurs de la pression et de la température du produit, la valeur de la pression étant mise à disposition en tant que valeur mesurée ou étant prédéfinie.

**8.** Procédé selon l'une des revendications précédentes, pour lequel un coefficient de transfert thermique (htc) est déterminé sur la base du coefficient de puissance corrigé, des valeurs actuelles pour le nombre de Nusselt (Nu) et le nombre de Prandtl (Pr) étant déterminées sur la base du coefficient de transfert thermique déterminé corrigé (htc), valeurs à l'aide desquelles une valeur actuelle pour le nombre de Reynolds (Re) est déterminée, une valeur pour le débit massique et la vitesse d'écoulement étant déterminée sur la base du nombre de Reynolds.

**9.** Procédé de la revendication 8, pour lequel une nouvelle correction pour l'effet de récupération est effectuée avec la valeur déterminée pour la vitesse d'écoulement, une nouvelle détermination du débit massique et de la vitesse d'écoulement est effectuée avec le coefficient de puissance résultant, le procédé étant répété de manière itérative jusqu'à ce que les valeurs de débit massique et de vitesse d'écoulement aient suffisamment convergé pour satisfaire une exigence donnée en terme de précision de mesure.

**10.** Débitmètre destiné à la détermination thermique du débit massique d'un gaz dans une conduite d'après un procédé selon l'une des revendications précédentes, lequel débitmètre comprend:

au moins un premier capteur de température autour duquel le produit peut circuler ;
au moins un deuxième capteur de température autour duquel le produit peut circuler ;
le premier capteur de température étant espacé du deuxième capteur de température,
le premier capteur de température comprenant un élément chauffant ;
le débitmètre comprenant en outre un circuit d'exploitation et d'évaluation pour alimenter l'élément chauffant avec une puissance Q,
mesurer les températures du premier capteur de température et du deuxième capteur de température $T_1$, $T_2$,
déterminer un coefficient de puissance en utilisant la puissance Q et une différence $\Delta T$ entre les températures mesurées $T_1$, $T_2$,
déterminer un coefficient de transfert de chaleur (htc) à partir du coefficient de puissance, le coefficient de transfert de chaleur (htc) déterminé étant utilisé pour déterminer des valeurs actuelles pour le nombre de Nusselt (Nu) et le nombre de Prandtl (Pr), à l'aide desquels une valeur actuelle du nombre de Reynolds (Re) est déterminée, une valeur pour le débit massique et la vitesse d'écoulement étant déterminée sur la base du nombre de Reynolds,
**caractérisé**
**en ce que** le premier et le deuxième capteur de température présentent des formes différentes en terme d'efficacité d'écoulement, et
**en ce que** le circuit d'exploitation et d'évaluation est conçu pour déterminer un coefficient de puissance $PC_{korr}$ qui est corrigé par rapport à l'effet de récupération.

**11.** Débitmètre selon la revendication 10, pour lequel le circuit d'exploitation et d'évaluation comprend un microprocesseur et au moins une mémoire de données dans laquelle l'au moins un facteur de récupération ou une différence entre deux facteurs de récupération est stocké(e), et/ou dans laquelle les relations entre le coefficient de transfert thermique (htc) et le nombre de Nusselt (Nu), ou entre le nombre de Nusselt (Nu), le nombre de Prandtl (Pr) et le nombre de Reynolds (Re) sont stockées sous forme de tableaux et/ou de fonctions.

Fig. 1

Fig.

100

Ermittle gemessenen
Leistungskoeffizienten:
$$PC_m = \frac{Q_m}{\Delta T_m}$$

110

Korrigiere den gemessenen
Leistungskoeffizienten für
Asymmetrien beim Recovery-
effekt:
$$PC_{korr\_1} = PC_m \cdot \frac{1}{1 - \frac{K_1}{\Delta T_m}},$$
mit
$$K_1 = \Delta_{12} \cdot \frac{u^2}{2c_p}$$

120

Korrigiere den ersten korrigierten
Leistungskoeffizienten für
den Recovery-Effekt des ersten
Temperaturfühlers:
$$PC_{korr\_2} = PC_{korr\_1} \cdot \frac{1}{1 + \frac{K_2}{\Delta T_{korr\_1}}}$$
mit
$$K_2 = \Delta_1 \cdot \frac{u^2}{2c_p}, \quad \Delta T_{korr\_1} = \Delta T_m - K_1$$

130

Ermittle den Wärmeübergangskoeffizienten anhand von
$$PC_{korr\_2}$$

**EP 2 841 883 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0624242 B1
- DE 102005057688 A1
- US 3085431 A